# EUROPÄISCHE PATENTSCHRIFT

(11) **EP 0 659 653 B1**
(45) Veröffentlichungstag und Bekanntmachung des Hinweises auf die Patenterteilung: **31.01.2001**
(21) Anmeldenummer: 94118509.2
(22) Anmeldetag: 24.11.1994
(51) Int. Cl.: A01F 25/13, B65D 30/22, E02B 3/12

(54) **Behältnis**
Container
Récipient

(30) Priorität: 20.12.1993 DE 9319575 U
(43) Veröffentlichungstag der Anmeldung: 28.06.1995
(73) Patentinhaber: König, Josef, D-83416 Saaldorf (DE)
(72) Erfinder: König, Josef, D-83416 Saaldorf (DE)
(74) Vertreter: Manitz, Finsterwald & Partner

(56) Entgegenhaltungen:
- CA-A- 1 276 092
- DE-A- 3 839 094
- DE-A- 3 925 856
- DE-A- 4 141 633
- DE-U- 9 319 575
- GB-A- 1 208 205
- US-A- 4 122 637
- PATENT ABSTRACTS OF JAPAN vol. 8, no. 140 (M-305) (1577) 29. Juni 1984 & JP-A-59 038 407 (CHIIKI KANKIYOU KOUGAKU KENKYUSHO)

## Beschreibung

Die Erfindung betrifft ein Behältnis, länglich sackförmig, aus unverrottbarem, wasserfestem Schlauchmaterial, mit parallel zueinander angeordneten, nahtlosen oder abgenähten Kammern zur Aufnahme von Sand, Riesel oder ähnlichen Füllstoffen, zur Randabdichtung und Beschwerung von nach oben offenen Behältern, wie beispielsweise Futtersilos.

In der Praxis unter der Bezeichnung Silosandsack, ist damit ein mit einer Einfüllöffnung und aus nur einer Kammer bestehendes schlauchförmiges Behältnis bekannt, welches anderends der Einfüllöffnung mit einem festen, undurchlässigen Überlappungsbereich versehen ist. Ein solcher Silosandsack besteht aus einem unverrottbaren, gegen Hitze und Kälte unempfindlichen, anschmiegsamen Gewebe, oder einem Kunststoffmaterial od. dgl. und wird mit Sand oder Riesel oder anderen geeigneten Materialien gefüllt. Leicht verschließbar ist die Einfüllöffnung eines solchen Sackes nach der jeweiligen Befüllung mit einem sogenannten Drillverschluß.

Säcke dieser Art werden, nachdem ein gefülltes Futtersilo gegen äußere Einflüsse mittels Folien abgedeckt ist, zur besseren Abdichtung gegen die Silowände und zur Beschwerung benötigt.

Diese bekannten Sandsäcke sollen dabei die Folien, die über die im Silo gelagerte Silage und über die Siloseitenwände gespannt ist, fest an diese Seitenwände andrücken und einen luftdichten Abschluß gewährleisten. Da die Silage in aller Regel nach ihrer Einfüllung in das Silo noch zusammenschrumpft, hat das zur Folge, daß auch die das Silagegut abdeckenden Folien sich dieser Schrumpfung anpassen, d.h. nachgeben und sich von den Silowänden lösen bzw. entfernen. Auch können die herkömmlichen Silosandsäcke gänzlich von einem Silo herrunter fallen. Diese bekannten Silosandsäcke sind dann nicht mehr in der Lage eine exakte, abdichtende Funktion zu übernehmen um an den Silowänden zur Anlage zu verbleiben. Das hat dann zur Folge, daß an diesen jetzt unzureichend abgedeckten Stellen Luft an das Silagegut gelangen kann. Es entstehen somit an diesen undicht gewordenen Stellen Fäulnisherde, Schimmelpilze od. dgl., die das Silagegut bis zur gänzlichen Unbrauchbarkeit verderben können. Die geringste Undichtigkeit genügt oft schon, um das möglicherweise noch gut abgedeckte restliche Silagegut auch unbrauchbar werden zu lassen.

Hier setzt die Erfindung ein, die es sich zur Aufgabe gemacht hat eine allen Anforderungen gerecht werdende Siloabdichtung zu schaffen und zu gewährleisten, daß die Folien immer exakt gespannt und immer abdichtend an bzw. über den Silowänden anliegen bleiben.

Aus der GB-A-1208205 ist ein sackförmiges Behältnis mit mehreren Kammern zur Uferbestigung bekannt, wobei das Material des Behältnisses eine bestimmte, vorgegebene Webstruktur besitzt. Die Kammern sind jeweils unmittelbar aneinander angrenzend angeordnet und können mit weiteren Kammern, die sich ebenfalls unmittelbar anschließen, verwoben werden.

Gelöst wird die Aufgabe der Erfindung durch ein Behältnis mit den Merkmalen des Anspruchs 1.

Mit dem Tandemsack wird erstmals in vorteilhafter Weise erreicht, daß die Beschwerung der das Silo abdeckenden Folien beiderseits über die jeweilige Silowand erfolgt. Dabei liegt der Steg über den Folien auf der Oberseite der jeweiligen Silowand während die gefüllten Kammern entsprechend abdichtend und beschwerend rechts und links überhängen. Ist ein Silo einmal nicht bis an den oberen Rand angefüllt, d.h. z.B. nur in halber oder dreiviertel Höhe, dann werden die Folien bis fest an die jeweilige Silowand angedrückt und der Tandemsack in diesen Eck- bzw. Abschlußbereich hinein gelegt. Die durch den Steg getrennten Kammern stehen mit diesem in einer z.B. dreiecksähnlichen Formation zueinander und üben nun eine gegenseitige Anpress- und Stützwirkung aufeinander aus, so daß wiederum eine feste, unverrückbare Lage gewährleistet ist.
Weitere, vorteilhafte Ausgestaltungen der Erfindung sind in den Unteransprüchen angegeben.

Mit der Verwendung eines durch die Erfindung geschaffenen Tandemsackes für die Abdeckung und Beschwerung eines Futtersilos ist aber die Verwendbarkeit keineswegs beendet. In überaus vorteilhafter Weise eignet sich dieser Tandemsack z.B. für die Verbauung eines Dammes, zur Wasserabweisung und/oder dergleichen. Durch die mittels Steg voneinander getrennten Kammern wird jeweils eine gute Anschmiegsamkeit und Flexibilität an die vorliegenden Gegebenheit erzielt.
Eine weitere Vorteilhaftigkeit besteht darin, daß der Tandemsack einfach, preiswert und in verschiedenen Größen hergestellt werden kann.

Die Selbstbefüllung durch den Benutzer mit dem für den Zweck entsprechend geeignetem Füllmaterial ist ebenfalls gegeben, wie eine einfache und leichte Verschlußhandhabe durch z.B. einen Drillverschluß.

In einem Ausführungsbeispiel für ein Futtersilo ist die Erfindung nachfolgt näher erläutert. Es zeigt :
- Fig. 1: eine Teilansicht eines gefüllten Futtersilos,
- Fig. 2: eine Teilansicht eines nur halb gefüllten Futtersilos,
- Fig. 3: den Tandemsack in Draufsicht und,
- Fig. 4: einen Schnitt durch den gefüllten Tandemsack entlang der Linie III-III der Fig. 3

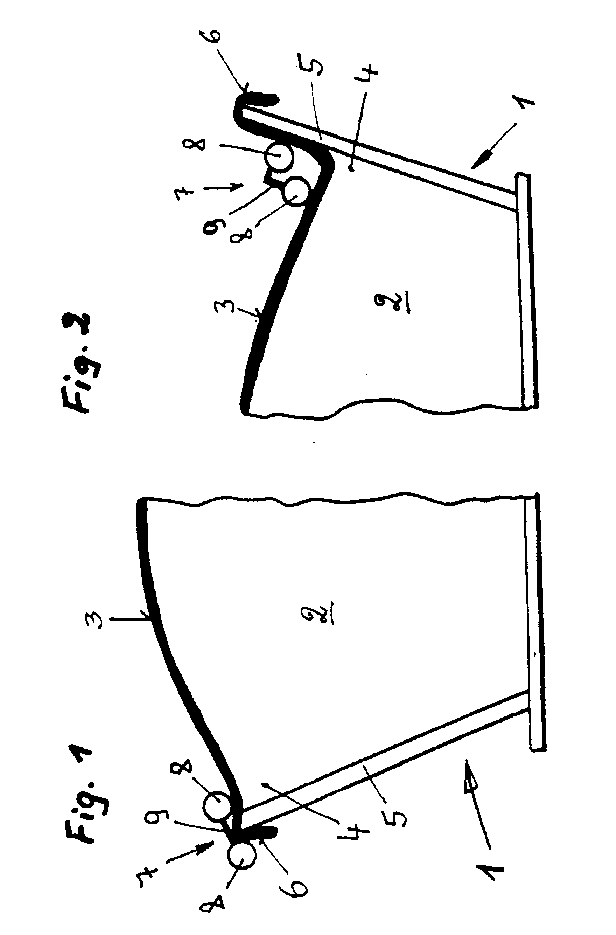

Entsprechend der Fig. 1 ist ein Futtersilo 1 in Teilansicht dargestellt. Das darin gelagerte Silagegut 2 wird von mindestens einer wasserundurchlässigen Folie 3 abgedeckt. Um in den Silorandbereichen 4 eine sach- und fachgerechte Abdeckung des Silagegutes 2 zu bekommen, wird die Folie 3 jeweils über die Silowand 5 gelegt. Da das Folienende 6 nicht eigenständig über der Silowand 5 liegen bleibt, Windboeen könnten sie wegwehen, muß dort eine entsprechende, abdichtende Beschwerung vorgenommen werden. Diese Beschwerung und Abdichtung wird mit dem erfindungsgemäßen Tandemsack 7 vorgenommen.

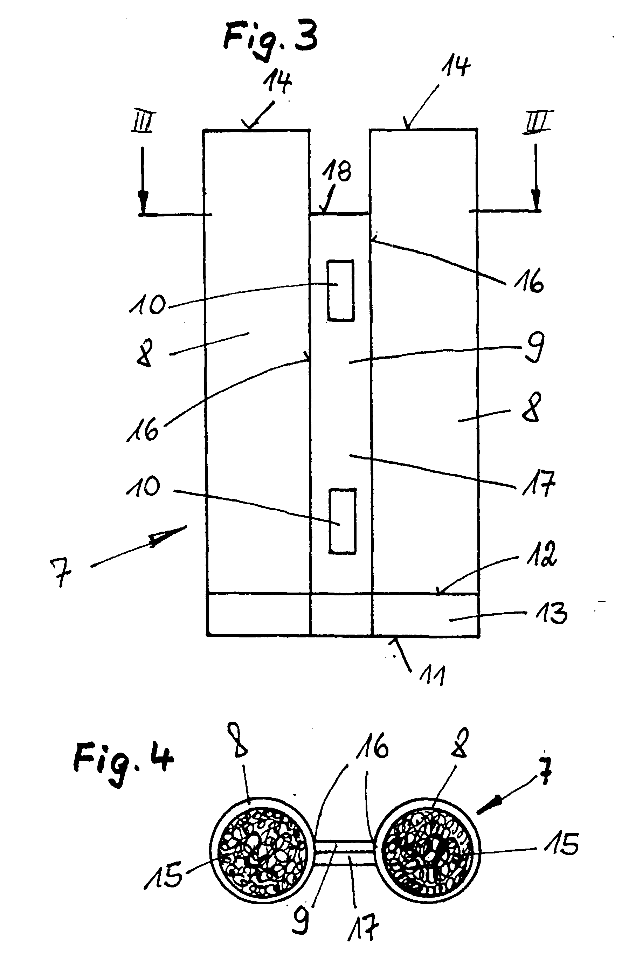

Der Tandemsack 7, dargestellt in Fig. 3 und 4, ist aus anschmiegsamen, unverrottbarem, wasserfesten Schlauchmaterial, bestehend aus mindestens zwei Kammern 8, die durch einen Steg 9 voneinander getrennt sind. Dieser Steg 9 trennt die Kammern 8 in Längsrichtung voneinander. Der Steg 9 kann entweder durch Abnähungen 16 eines größeren Schlauchmaterials gebildet werden, aber auch durch das Aneinandernähen von mindestens zwei kleineren Schlauchteilen und einem flexiblen Mittelteil 17 oder einer flexiblen Einlage. In bzw. an diesem Steg 9 sind Tragegriffe 10 ein- bzw. aufgebracht, um den Tandemsack 7 gut anfassen zu können. An seinem Ende 11 ist der Tandemsack 7 mit einer festen Abnähung 12 versehen. Dieser Abnähung 12 folgt endseits ein Überlappungsbereich 13 der nach der Verlegung der Tandemsäcke 7 jeweils die Einfüllöffnungen 14 von einem anderen, davor liegenden Tandemsack 7 überdeckt. Die Einfüllöffnungen 14 dienen zur Befüllung eines Tandemsackes 7 mit z.B. Riesel 15 od. dgl.. Jede Kammer des Tandemsackes 7 wird nach dem Befüllen mit dem jeweils geeigneten Füllmaterial mit einem nicht dargestellten Drillverschluß, leicht handhabbar, verschlossen. Dieser leicht handhabbare Kammernverschluß wird nicht zuletzt dadurch erreicht, daß das Stegende 18 unterhalb der Einfüllöffnung 14 endet. Das hat den weiteren Vorteil, daß sich der Tandemsack besonders gut an der Silowand anschmiegt und eine sehr gute Abdichtung schafft.

Nachdem ein Futtersilo 1 mit Silagegut 2 teil- oder ganz gefüllt ist, wird es mit mindesten einer Folie 3 abgedeckt. Dabei wird diese Folie 3 über die jeweilige Silowand 5 gezogen und mit den befüllten Tandemsäcken 7 abgedeckt. Während der Steg 9 oben auf der Silowand zuliegen kommt, hängen die befüllten Kammern 8 beiderseits über der Silowand 5. Sie zwängen förmlich die Folie 3 wie eine Kappe über die jeweilige Silowand 5 zur festen, luftdichten Abdichtung. Ist dagegen das Futtersilo 1, nach Fig. 2 nur zur Hälfte mit Silagegut 2 angefüllt wird die Folie 3 trotzdem über die jeweilige Silowand 5 gelegt. Eine Beschwerung und Abdichtung erfolgt jetzt aber nicht wie in Fig. 1 dargestellt, oben auf der Silowand 5 sondern direkt oberhalb des Silagegutes 2.

Dabei wirkt der Steg 9 abstützend auf die beiden befüllten Kammern 8, so daß eine feste Anpressung hier erreicht wird.

Die Erfindung ist nicht alleine auf die beschriebene Ausführung beschränkt. So können z.B. die Kammern 8 in Längsrichtung gesehen versetzt angeordnet sein. Auch der Steg 9 ist dann unterhalb 18 der Einfüllöffnungen 14 schräg verlaufend um auch in diesem Fall eine gute Verschließbarkeit der einfüllöffnungen 14 zu gewährleisten. Im Überlappungsbereich 13 hat der Steg 9 dann auch die entsprechend abgeschrägte Anpassung. Ferner eignet sich dieser Tandemsack 7, neben der Verwendung bei Futtersilos 1 auch bei der nicht näher dargestellten Dammverbauung. Somit ist durch die Erfindung ein überaus vielseitig verwendbarer Tandemsack 7 geschaffen worden.

### Bezugszeichenliste

- 1: Futtersilo
- 2: Silagegut
- 3: Folie
- 4: Silowandbereich
- 5: Silowand
- 6: Folienende
- 7: Tandemsack
- 8: Kammern
- 9: Steg
- 10: Tragegriffe
- 11: Ende
- 12: Abnähung
- 13: Überlappungsbereich
- 14: Einfüllöffnung
- 15: Riesel
- 16: Abnähung
- 17: Mittelteil
- 18: Stegende

## Patentansprüche

1. Behältnis, länglich, sackförmig, aus unverrottbarem, wasserfestem Schlauchmaterial, mit parallel zueinander angeordneten, nahtlosen oder abgenähten, Kammern (8) zur Aufnahme von Füllstoffen wie beispielsweise Sand oder Riesel, für die Randabdichtung und Beschwerung von nach oben offenen Behältern (1), bei dem jede der in Längsrichtung parallel nebeneinander angeordneten und durch einen Steg (9) voneinander getrennten Kammern (8) in einer eigenen, wieder verschließbaren Einfüllöffnung (14) des Tandemsacks (7) ausmündet, wobei die Kammern (8) durch den Steg (9) deutlich voneinander beabstandet sind und der Steg (9) eine so große Breite aufweist, daß beim Auflegen des Tandemsacks (7) auf die Oberseite einer Wand (5) des Behälters (1) der Steg auf der Oberseite aufliegt, während die Kammern (8) seitlich der Behälterwand (5) überhängen, und beim Einlegen des Tandemsacks (7) in einen nur teilweise befüllten Behälter (1) der Steg (9) eine feste, unverrückbare Lage der beiden Kammern (8) gewährleistet.

2. Behältnis nach Anspruch 1,
**dadurch gekennzeichnet**,
daß der die Kammern ( 8 ) voneinander trennende Steg ( 9 ) im Bereich der Einfüllöffnungen ( 14 ) unterhalb diesen mit seinem Stegende ( 18 ) endet.

3. Behältnis nach Anspruch 1 und 2,
**dadurch gekennzeichnet**,
daß der die Kammern ( 8 ) voneinander trennende Steg ( 9 ) anderends der Einfüllöffnungen ( 14 ) mit dem Überlappungsbereich ( 13 ) eine Einheit bildet.

4. Behältnis nach Anspruch 1 bis 3,
**dadurch gekennzeichnet**,
daß die durch den Steg ( 9 ) voneinander getrennten Kammern ( 8 ) im längsseitigen Versatz zueinander angeordnet sein können.

5. Behältnis nach Anspruch 1 bis 4,
**dadurch gekennzeichnet,**
daß der Steg ( 9 ) als Abnähung ( 16 ) ausgebildet ist.

6. Behältnis nach Anspruch 1 bis 5,
**dadurch gekennzeichnet,**
daß der Steg ( 9 ) durch ein Mittelteil ( 17 ), oder eine flexible Einlage gebildet ist.

7. Behältnis nach Anspruch 1 bis 6,
**dadurch gekennzeichnet,**
daß der Steg ( 9 ) mindestens einen Tragegriff ( 10 ) aufweist.

8. Behältnis nach Anspruch 1 bis 7,
**dadurch gekennzeichnet,**
daß der Steg ( 9 ) bei Kammernversatz jeweils schräg endet.

9. Verwendung eines Behältnisses nach einem der vorhergehenden Ansprüche für die Dammverbauung.

## Claims

1. A receptacle, elongate, sack-like, made of rot-proof, water-resistant tubular material, having seamless chambers (8) or chambers (8) closed by a seam which are arranged parallel to one another for receiving filling materials such as sand or particulate for the sealing of edges and the weighting of containers (1) open to the top, wherein each of the chambers (8) arranged parallel and adjacent to one another in a longitudinal direction and separated from one another by a web (9) opens in its own, reclosable filling opening (14) of a tandem sack (7), with the chambers (8) being clearly spaced from one another by the web (9) and the web (9) having such a large width that when the tandem sack (7) is placed on the upper side of a wall (5) of the container (1), the web lies on the upper side, while the chambers (8) overhang the container wall (5) at the sides, and when the tandem sack (7) is inserted into an only partly filled container (1), the web (9) ensures a fixed, immovable position of the two chambers (8).

2. A receptacle in accordance with claim 1 characterised in that an end (18) of the web (9) separating the chambers (8) from one another ends in the region of said filling openings (14)below the filling openings (14).

3. A receptacle in accordance with claim 1 and claim 2 characterised in that the web (9) separating the chambers (8) from one another forms a unit with the overlapping region (13) at the other end from the filling openings (14).

4. A receptacle in accordance with claims 1 to 3 characterised in that the chambers (8) separated from one another by the web (9) can be arranged offset to one another lengthwise.

5. A receptacle in accordance with claims 1 to 4 characterised in that the web (9) is formed as a take-in (16).

6. A receptacle in accordance with claims 1 to 5 characterised in that the web (9) is formed by a middle part (17) or a flexible insert.

7. A receptacle in accordance with claims 1 to 6 characterised in that the web (9) has at least one carrying handle (10).

8. A receptacle in accordance with claims 1 to 7 characterised in that the web (9) ends obliquely when the chambers are offset.

9. Use of a receptacle in accordance with one of the preceding claims for building a dam.

## Revendications

1. Récipient allongé en forme de sac, en matériau tubulaire imputrescible et résistant à l'eau, comprenant des chambres (8) agencées parallèlement les unes aux autres, cousues ou dépourvues de coutures, afin de recevoir des matériaux de remplissage comme par exemple du sable ou du gravier, pour l'étanchement de bordure et pour le lestage de réservoirs (1) ouverts vers le haut, dans lequel chacune des chambres (8) agencées parallèlement les unes aux autres en direction longitudinale et séparées des unes des autres par un voile (9) débouche dans une ouverture de remplissage propre (14) et refermable du sac tandem (7), lesdites chambres (8) étant nettement écartées les unes des autres au moyen dudit voile (9), et le voile (9) présente une largeur telle que lorsque le sac tandem (7) est posé sur la face supérieure d'une paroi (5) du réservoir (1) le voile repose sur ladite face supérieure, tandis que les chambres (8) sont suspendues latéralement le long de la paroi (5) du réservoir, et lors de la mise en place du sac tandem (7) dans un réservoir (1) uniquement partiellement rempli, le voile (9) garantit aux deux chambres (8) une position fixe et immobile.

2. Récipient selon la revendication 1, caractérisé en ce que le voile (9) qui sépare les chambres (8) les unes des autres se termine par son extrémité (18) dans la région des ouvertures de remplissage (14) et au-dessous de celle-ci.

3. Récipient selon l'une ou l'autre des revendications 1 et 2, caractérisé en ce que le voile (9) qui sépare les chambres (8) les unes des autres forme, à l'extrémité opposée aux ouvertures de remplissage (14), une unité avec la zone en chevauchement (13).

4. Récipient selon les revendications 1 à 3, caractérisé en ce que les chambres (8) séparées les unes des autres par le voile (9) sont susceptibles d'être agencées avec un décalage longitudinal les unes par rapport aux autres.

5. Récipient selon les revendications 1 à 4, caractérisé en ce que le voile (9) est réalisé par couture (16).

6. Récipient selon les revendications 1 à 5, caractérisé en ce que le voile (9) est réalisé par une partie médiane (17) ou par un insert souple.

7. Récipient selon les revendications 1 à 6, caractérisé en ce que le voile (9) comprend au moins une poignée de portage (10).

8. Récipient selon les revendications 1 à 7, caractérisé en ce que le voile se termine en oblique lorsque les chambres sont décalées.

9. Utilisation d'un récipient selon l'une des revendications précédentes pour la construction de barrages.
